# EUROPÄISCHE PATENTANMELDUNG

(11) **EP 1 800 835 A1**
(43) Veröffentlichungstag der Anmeldung: **27.06.2007**
(21) Anmeldenummer: 06022289.0
(22) Anmeldetag: 25.10.2006
(51) Int. Cl.: B29C 51/14

(54) **Verfahren zur Herstellung von Formteillaminaten**

(30) Priorität: 23.12.2005 DE 102005062352
(71) Anmelder: SKS Sitzkomponenten GmbH & Co. KG, 41065 Mönchengladbach (DE)
(72) Erfinder: Salzmann, Oliver, 47877 Willich (DE)
(74) Vertreter: Gesthuysen, von Rohr & Eggert

(57) **Zusammenfassung**

Die Erfindung betrifft ein Verfahren zur Herstellung eines Formteillaminats (1) mit mehrschichtigem Aufbau (2) und dreidimensionaler Form, welches sich insbesondere für die Herstellung von Möbeln, dekorativen Elementen, Hohlraumkanälen, Automobilzubehör und dergleichen eignet, wobei ein zumindest im wesentlichen plattenförmiges Werkstoffteil (6) mit mehrschichtigem Aufbau (2) zu dem Formteillaminat (1) insbesondere mittels Thermoformen umgeformt wird, wobei das Werkstoffteil (6) mindestens einen umformbaren, insbesondere thermoformbaren Träger (3) und mindestens ein dem Träger (3) zugeordnetes, insbesondere textiles Flächenmaterial (4) aufweist. Das Flächenmaterial (4) wird während der Umformung des Werkstoffteils (6) auf den Träger (3) auflaminiert derart, daß der Träger (3) und das Flächenmaterial (4) während der Umformung auf- und/oder gegeneinander verschoben werden und nach Beendigung der Umformung das Formteillaminat (1) resultiert, bei dem das Flächenmaterial (4) und der Träger (3) unverschiebbar miteinander verbunden sind.

## Beschreibung

Die vorliegende Erfindung betrifft ein Verfahren zur Herstellung eines Formteillaminats nach dem Oberbegriff von Anspruch 1 und ein mit dem erfindungsgemäßen Verfahren herstellbares Formteillaminat als solches.

In bezug auf die Herstellung von mehrschichtigen, eine thermoplastische Komponente bzw. Schicht enthaltenden Formteillaminaten, die im Rahmen der vorliegenden Erfindung synonym auch als Formteile bezeichnet werden, ist es im Stand der Technik vorgesehen, daß ein umformbares Material, welches im allgemeinen plattenförmig ausgebildet ist, zunächst mittels geeigneter Verfahren in die gewünschte dreidimensionale Form überführt wird. In einem anschließenden Schritt kann auf das so erhaltene dreidimensionale Formteillaminat eine weitere Schicht, beispielsweise ein textiles Flächengebilde oder dergleichen aufgebracht bzw. dauerhaft hieran befestigt werden. Dabei folgt die Befestigung des textilen Flächenmaterials beispielsweise mittels Verklebung oder dergleichen.

Nachteilig hierbei ist jedoch, daß das Flächenmaterial nach der Umformung aufgebracht wird, weil dies die Verklebung erschwert und daß die hohe Anzahl an Verfahrensschritten arbeits- und kostenintensiv ist. Insbesondere ist es oftmals nicht möglich, daß textile Flächenmaterial ganzflächig mit dem umgeformten Material zu verbinden; denn insbesondere im Bereich starker Umformungen (z. B. bei starken Biegungen, Ein- bzw. Auswölbungen und dergleichen) tritt eine starke Dehn- bzw. Stauchbeanspruchung des textilen Flächenmaterials auf, was oftmals zu einer Ablösung bzw. Delaminierung des Flächenmaterials führen kann. Darüber hinaus tritt beim nachträglichen Aufbringen eines textilen Flächenmaterials auf das bereits umgeformte Material häufig eine unerwünschte Faltenbildung auf.

Ein weiterer Nachteil bei diesem Verfahren ist darin zu sehen, daß aufgrund der nachträglichen Fixierung des textilen Flächenmaterials auf die dreidimensionale Struktur eine ungleichmäßige Dehnbeanspruchung des textilen Flächenmaterials resultieren kann, was zu einem uneinheitlichen Oberflächenbild führt. Schließlich können die durch das nachträgliche, mitunter ungleichmäßige Aufziehen, des textilen Flächenmaterials auf die Trägerstruktur resultierenden hohen bzw. uneinheitlichen Rückstellkräfte zu einer nachträglichen Verformung des Formteillaminats führen.

In der auf die Anmelderin selbst zurückgehenden DE 36 12 834 A1 wird ein Textilverbundstoff vorgeschlagen, welcher aus einer mit einem Textilstoff beklebten Schaumstofflage besteht. Dabei ist es vorgesehen, den Textilstoff vor der endgültigen Formgebung auf die Schaumstofflage aufzubringen. Nachteilig ist hierbei jedoch, daß der Schaumstoff zunächst verhautet bzw. an den Oberflächenporen verschlossen werden muß, um überhaupt eine Formgebung durchführen zu können. Es resultiert jedoch ein mitunter wenig belastbarer und infolge der Elastizität des Schaumstoffs wenig formstabiler Verbundstoff, der sich aufgrund des prinzipiellen Fehlens eines zusätzlichen Trägermaterials nicht für hohe Kraftbeanspruchungen eignet, wie sie im Rahmen von selbsttragenden und kraftmäßig belastbaren Strukturen, insbesondere für Sitzmöbel, gefordert werden. Darüber hinaus ist das beschriebene Verfahren aufgrund der zwingend vorgesehenen Verhautung des Schaumstoffs zeit- und kostenintensiv sowie apparativ aufwendig.

Vor diesem technischen Hintergrund besteht nunmehr die Aufgabe der vorliegenden Erfindung darin, ein Verfahren zur Herstellung eines mehrschichtigen Formteils bzw. Formteillaminats bereitzustellen, welches die zuvor geschilderten Nachteile des Standes der Technik zumindest teilweise vermeidet oder aber wenigstens abschwächt. Insbesondere soll ein Verfahren bereitgestellt werden, bei welchem die jeweiligen Schichten des als Verbundsystems ausgestalteten Formteillaminats während der Herstellung bzw. Umformung einer geringen Dehn- bzw. Stauchbeanspruchung ausgesetzt sind. Dabei sollen in bezug auf das Formteillaminat starke Biegungen, Ein- und Ausbuchtungen und dergleichen realisiert werden können, ohne daß Delaminierungen oder Faltenbildungen in bezug auf die einzelnen Schichten des Formteillaminats auftreten. Schließlich soll das resultierende Formteillaminat selbsttragend und in hohem Maße formstabil sein, so daß es sich insbesondere zur Verwendung in Möbeln, wie Sitzmöbeln, eignet.

Zur Lösung der zuvor geschilderten Aufgabenstellung schlägt die vorliegende Erfindung ein Verfahren zur Herstellung eines Formteillaminats mit mehrschichtigem Aufbau und dreidimensionaler Form gemäß Anspruch 1 vor.

Weitere, vorteilhafte Ausgestaltungen sind Gegenstand der Verfahrensunteransprüche.

Weiterhin ist Gegenstand der vorliegenden Erfindung ein mit dem erfindungsgemäßen Verfahren erhältliches Formteillaminat, welches sich insbesondere für die Herstellung von Möbeln, dekorativen Elementen, Hohlraumkanälen und dergleichen eignet, nach Anspruch 18.

Ein erster Gegenstand der vorliegenden Erfindung ist somit ein Verfahren zur Herstellung eines Formteillaminats mit mehrschichtigem Aufbau und dreidimensionaler Form, insbesondere für die Herstellung von Möbeln, dekorativen Elementen und Hohlraumkanälen, Automobilzubehör (z. B. Türverkleidungen) und dergleichen. Im Rahmen des erfindungsgemäßen Verfahrens wird ein zumindest im wesentlichen plattenförmiges Werkstoffteil mit mehrschichtigem Aufbau zu dem Formteillaminat insbesondere mittels Thermoformen umgeformt. Das hierzu verwendete Werkstoffteil weist mindestens einen umformbaren, insbesondere thermoformbaren Träger und mindestens ein dem Träger zugeordnetes, insbesondere textiles Flächenmaterial auf. Eine Besonderheit des erfindungsgemäßen Verfahrens ist darin zu sehen, daß das Flächenmaterial während der Umformung des Werkstoffteils auf den Träger auflaminiert wird derart, daß der Träger und das Flächenmaterial während der Umformung auf- und/oder gegeneinander verschoben werden. Eine weitere Besonderheit des erfindungsgemäßen Verfahrens liegt zudem darin, daß nach Beendigung der Umformung ein Formteillaminat resultiert, bei dem das Flächenmaterial und der Träger unverschiebbar miteinander verbunden sind.

Eine zentrale Idee der vorliegenden Erfindung liegt somit darin, ein Verfahren bereitzustellen, bei welchem während der Umformung des Werkstoffteils zu dem dreidimensionalen Formteillaminat die jeweiligen Schichten auf- bzw. gegeneinander verschoben werden können, so daß die jeweiligen Schichten mit anderen Worten während des Umformens sozusagen aufeinander gleiten können. Somit resultiert während des Umformens gewissermaßen ein "Nachfließen" bzw. "Nachgleiten" der jeweiligen Schichten, insbesondere des Flächenmaterials, was während des Umformens zu signifikant geringeren Dehn- bzw. Stauchbeanspruchungen insbesondere in bezug auf das Flächenmaterial als solches führt. Auf diese Weise wird einer Falten- bzw. Blasenbildung, Delaminierung bzw. einer Rißbildung bzw. einem Zerreißen selbst bei starken Umformungen wirksam entgegengewirkt.

Mit dem erfindungsgemäßen Verfahren wird ein dreidimensionales Formteillaminat nach der Erfindung mit mindestens einem mindestens einen Träger zugeordneten, insbesondere textilen Flächenmaterial erhalten. Dabei kann das erfindungsgemäße Formteillaminat starke Biegungen bzw. Umformungen aufweisen, wodurch individuelle, an die jeweiligen Anforderungen - beispielsweise anatomische Formgebung bei gleichzeitig hoher kraftmäßiger Belastungsfähigkeit in bezug auf Sitzmöbel - angepaßte Formen bzw. Strukturen realisiert werden.

Aufgrund der Verwendung eines vorzugsweise textilen Flächenmaterials, welches auf einen Träger auflaminiert wird, welcher beispielsweise aus einem nichtporösen thermoplastischen Material oder einem thermoplastischen Schaumstoffmaterial bestehen kann, können Oberflächen ausgebildet werden, welche über hervorragende haptische und optische Eigenschaften verfügen, so daß sich das Formteillaminat in besonderer Weise für die Herstellung von Einrichtungsgegenständen eignet. Zudem ist es erfindungsgemäß möglich, daß auf einem nichtporösen thermoplastischen Träger ein weiterer Träger, vorzugsweise aus einem Schaumstoffmaterial, auflaminiert wird, auf welchem wiederum vorzugsweise das textile Flächenmaterial auflaminiert wird. Zudem kann - wie nachfolgend noch beschrieben - auch die dem Flächenmaterial abgewandte Seite mit einem weiteren, insbesondere textilen Flächenmaterial bzw. einem weiteren insbesondere schaumstoffartigen Träger ausgestattet sein, so daß gewissermaßen eine "Sandwichstruktur" resultiert, bei welcher der nichtporöse thermoplastische Träger sozusagen die Kernschicht des Schicht- bzw. Kompositmaterials bildet.

Erfindungsgemäß wird unter dem Begriff "plattenförmig" (z. B. plattenförmiges Werkstoffteil) eine zumindest im wesentlichen ebene bzw. planare Form insbesondere des zur Herstellung des Formteillaminats verwendeten Werkstoffteils verstanden, wobei die Dicke des Werkstoffteils zumindest im wesentlichen über seine Fläche konstant ist. Sofern anwendungsbezogen erwünscht, können die einzelnen Schichten flächenbezogen jedoch unterschiedliche Dicken aufweisen, beispielsweise um eine weiter optimierte Form bei Sitzmöbeln zu realisieren.

Im Rahmen der vorliegenden Erfindung ist der Begriff "umformbar" (z. B. umformbarer Träger bzw. umformbares Werkstoffteil) so zu verstehen, daß der Träger bzw. das Werkstoffteil unter Beibehaltung der Masse des Schichtzusammenhangs zumindest im wesentlichen irreversibel in eine andere Form bzw. Struktur überführt werden kann.

In diesem Zusammenhang ist der Begriff "thermoformbar" (z. B. thermoformbarer Träger bzw. thermoformbares Werkstoffteil) so zu verstehen, daß der Träger bzw. das Werkstoffteil unter Erwärmung, beispielsweise auf einen Temperaturbereich oberhalb des Erweichungspunkts des thermoplastischen Trägers, insbesondere mittels Warmformen, umgeformt werden kann. Hierzu geeignete Verfahren sind dem Fachmann hinlänglich bekannt. Beispielsweise kann das Thermoformen mittels Tiefziehen, Vakuumformen, Vakuumtiefziehformen und dergleichen erfolgen. Im Rahmen der Umformverfahren können dem Fachmann an sich bekannte Stempel verwendet werden, welche das umzuformende Ausgangsprodukt, im vorliegenden Fall das plattenförmige Werkstoffteil, gewissermaßen in eine Form zum Erhalt des dreidimensionalen Formteillaminats drücken bzw. ziehen. Die Verwendung derartiger Stempel bzw. Formen ist dem Fachmann zu diesem Zweck hinlänglich bekannt.

Der Begriff "auf- und/oder gegeneinander" (beispielsweise in bezug auf die Verschiebbarkeit des Trägers und des Flächenmaterials) ist im Rahmen der vorliegenden Erfindung derart zu verstehen, daß die jeweiligen Schichten des Formteillaminats, insbesondere der Träger einerseits sowie das Flächenmaterial andererseits während des Umformens flächenbezogen, d. h. gewissermaßen entlang ihrer Berührungs- bzw. Kontaktflächen, verschoben werden können. Mit anderen Worten wird die Berührung bzw. der Kontakt der jeweiligen Schichtflächen zumindest im wesentlichen nicht aufgehoben bzw. unterbrochen. Vielmehr liegt im Rahmen des erfindungsgemäßen Verfahrens während der Umformung vorzugsweise ein "Nachfließen" bzw. "Nachgleiten" der entsprechenden Schichten vor, wobei die jeweiligen Schichten auch während der Umformung weiterhin zumindest im wesentlichen in Berührung bzw. Kontakt zueinander stehen.

Weiterhin bezeichnet der Begriff "dreidimensional" (z. B. dreidimensionale Form bzw. Struktur des Formteillaminats) eine derartige Form bzw. Struktur, die von der ebenen bzw. planaren Struktur abweichende ausgeformte bzw. räumliche Bereiche aufweist, zu denen beispielsweise und in nichtbeschränkender Weise Ein- bzw. Auswölbungen, Vertiefungen, Biegungen und dergleichen zu zählen sind.

Weiterhin ist der Begriff "formstabil" (z. B. formstabiles Werkstoffteil bzw. Formteillaminat) erfindungsgemäß so zu verstehen, das erfindungsgemäße Formteillaminat den bei der jeweiligen Anwendung, beispielsweise im Rahmen der Herstellung von Sitzmöbeln, resultierenden Belastungen widerstehen kann bzw. diese aufzunehmen imstande ist

Der Ausdruck "zugeordnet" (z. B. ein dem Träger zugeordnetes Flächenmaterial) ist erfindungsgemäß derart zu verstehen, daß einerseits die Möglichkeit besteht, daß das Flächenmaterial unmittelbar, d. h. direkt auf dem Träger auflaminiert bzw. fixiert wird, andererseits dieser Begriff gleichermaßen auch eine mittelbare Zuordnung des Flächenmaterials in bezug auf den Träger umfassen kann, wobei beispielsweise zwischen dem Flächenmaterial und dem Träger weitere Träger im Sinne einer Zwischenschicht angeordnet sind.

Schließlich ist unter dem Begriff "Auflaminieren" bzw. "Laminieren" (z. B. Auflaminieren des Flächenmaterials auf den Träger) ein insbesondere flächiges Verbinden bzw. Verkleben der jeweiligen Schichten des Werkstoffteils zu verstehen, wobei das Verbinden der einzelnen Schichten beispielsweise mittels dem Fachmann wohlbekannter Verfahren, insbesondere Kaschierverfahren, im allgemeinen mittels geeigneter Laminiermittel, wie Klebstoffe, Schmelzklebstoffe, Schmelzkleberwebs und dergleichen, erfolgen kann. In diesem Zusammenhang sollte die flächige Verbindung bzw. Laminierung oder Kaschierung der einzelnen Schichten vorzugsweise vollflächig erfolgen, d. h. das Kaschiermittel ist vorzugsweise kontinuierlich aufgetragen. Gleichermaßen ist jedoch auch eine diskontinuierliche Verbindung möglich, beispielsweise durch einen punktförmigen oder rasterförmigen Auftrag des Klebstoffs. Gemäß einer besonderen Ausgestaltung können die jeweiligen Schichten des Werkstoffteils bzw. des Formteillaminats durch dem Fachmann an sich bekannte Flammkaschierverfahren miteinander verbunden werden, wobei insbesondere gewährleistet sein sollte, daß zumindest eine Schicht über hitzeklebrige Eigenschaften verfügt.

Weitere Vorteile, Merkmale, Eigenschaften und Aspekte der vorliegenden Erfindung ergeben sich aus der nachfolgenden Beschreibung von bevorzugten Ausführungsformen anhand der Figuren. Es zeigt:
- Fig. 1A: eine schematische Darstellung eines mittels des erfindungsgemäßen Verfahrens hergestellten Formteillaminats, wobei das Formteillaminat einen 2-Schicht-Aufbau aufweist;
- Fig. 1B: eine schematische Darstellung eines mit dem erfindungsgemäßen Verfahren hergestellten Formteillaminats gemäß einer alternativen Ausführungsform, wobei das Formteillaminat einen 5-Schicht-Aufbau aufweist;
- Fig. 2: eine schematische Darstellung eines erfindungsgemäßen Verfahrensablaufs, bei welchem ein Werkstoffteil zu einem erfindungsgemäßen Formteillaminat umgeformt wird.

In den Figuren werden für gleiche oder ähnliche Teile dieselben Bezugszeichen verwendet, wobei entsprechende Eigenschaften und Vorteile erreicht werden, auch wenn eine wiederholte Beschreibung aus Vereinfachungsgründen weggelassen ist.

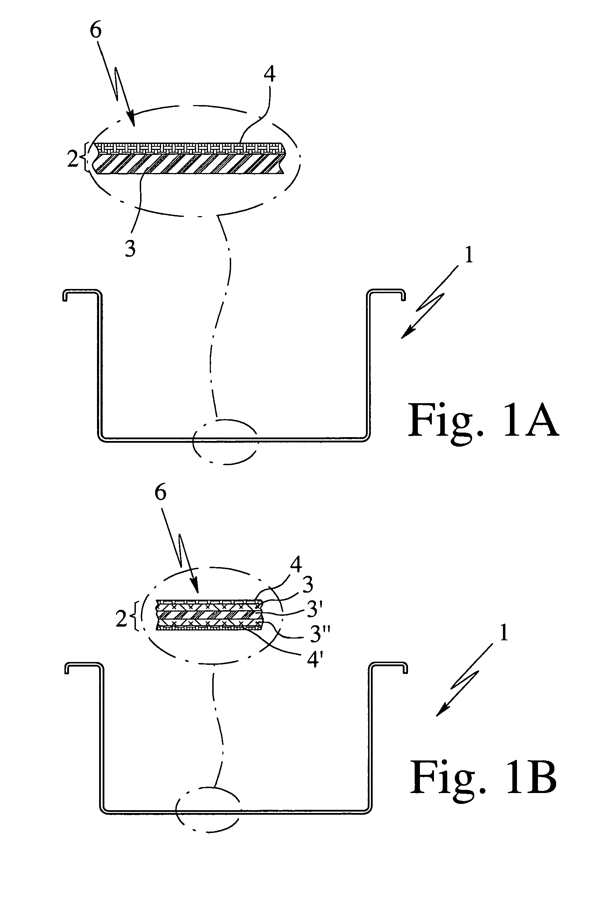

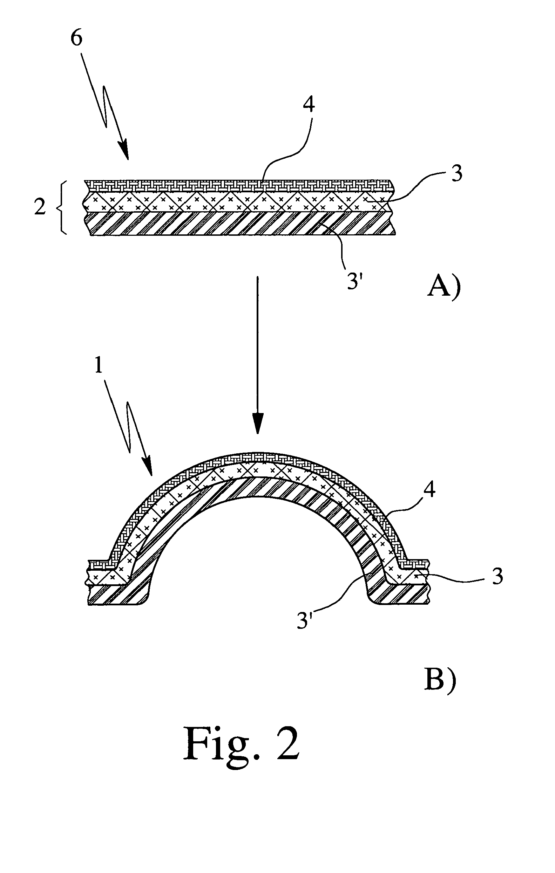

Fig. 1 zeigt ein mit dem erfindungsgemäßen Verfahren hergestelltes Formteillaminat 1 mit mehrschichtigem Aufbau 2 und einer dreidimensionalen Form bzw. Struktur. Das mit Hilfe des erfindungsgemäßen Verfahrens hergestellte Formteillaminat 1 eignet sich insbesondere für die Herstellung von Möbeln, dekorativen Elementen, Hohlraumkanälen, Zubehör- bzw. Ausstattungsteilen für Kraftfahrzeuge und dergleichen. Wie Fig. 2 schematisch zu entnehmen ist, wird bei dem erfindungsgemäßen Verfahren zunächst ein zumindest im wesentlichen plattenförmiges Werkstoffteil 6 mit mehrschichtigem Aufbau 2 zu dem Formteillaminat 1 insbesondere mittels Thermoformen umgeformt. Fig. 1A zeigt, daß das für das erfindungsgemäße Verfahren eingesetzte Werkstoffteil 6 mindestens einen umformbaren, insbesondere thermoformbaren Träger 3 und mindestens ein dem Träger 3 zugeordnetes, insbesondere textiles Flächenmaterial 4 aufweist.

Das erfindungsgemäße Verfahren zeichnet sich dadurch aus, daß das Flächenmaterial 4 während der Umformung des Werkstoffteils 6 auf den Träger 3 auflaminiert wird derart, daß der Träger 3 und das Flächenmaterial 4 während der Umformung auf- bzw. gegeneinander verschoben werden. Nach Beendigung der Umformung resultiert ein Formteillaminat 1, bei dem das Flächenmaterial 4 und der Träger 3 unverschiebbar miteinander verbunden sind.

Erfindungsgemäß ist es somit vorgesehen, daß eine Laminierung der Schichten, insbesondere des Flächenmaterials 4 und des Trägers 3, während der Umformung stattfindet. Hierdurch wird erreicht, daß die jeweiligen Schichten, insbesondere das Flächenmaterial 4 und der Träger 3, während des Umformvorgangs gewissermaßen aufeinander gleiten können. Es resultiert somit während der Umformung ein "Nachfließen" bzw. "Nachgleiten" des Flächenmaterials 4 auf dem Träger 3, so daß das Flächenmaterial 4 beim Umformen in bezug auf den Träger 3 an dessen Oberfläche frei bewegbar und somit sozusagen auf dem Träger 3 verschiebbar ist, so daß die jeweiligen Schichten aufeinander gleiten können. Denn es wurde völlig überraschend gefunden, daß sich besonderes gute Umformergebnisse realisieren lassen, wenn während des Formgebungsverfahrens bzw. der Umformung insbesondere das Flächenmaterial 4 auf dem Träger 3 gewissermaßen frei bewegbar bzw. frei verschiebbar ist, so daß die jeweiligen Schichten aufeinander gleiten können. Auf diese Weise wird verhindert, daß einzelne Schichten, insbesondere das Flächenmaterial 4, beim Umformen einer übermäßigen Beanspruchung durch Dehnen und/oder Stauchen ausgesetzt werden, wodurch einer Faltenbildung, Delaminierung und/oder einer Rißbildung bzw. einem Zerreißen wirkungsvoll entgegengewirkt wird.

Wie nachfolgend noch erörtert, ist das erfindungsgemäße Verfahren nicht auf die Umformung einer 2-Schicht-Struktur aus einem Flächenmaterial 4 und einem Träger 3 beschränkt; vielmehr können im Rahmen der vorliegenden Erfindung auch Materialien mit einer Schichtstruktur aus drei, vier, fünf oder mehr Schichten umgeformt werden, wobei auch diesbezüglich erfindungsgemäß die jeweiligen Schichten während der Umformung zu dem erfindungsgemäßen Formteillaminat 1 laminiert werden, so daß auch im Falle einer vielschichtigen Struktur bzw. eines vielschichtigen Aufbaus 2 gewährleistet ist, daß die jeweiligen Schichten während der Umformung auf- bzw. gegeneinander verschoben werden können.

Nach Beendigung der Umformung, welche üblicherweise mit einem Abkühlen, insbesondere auf Umgebungstemperatur, wie Raumtemperatur, des Formteillaminats 1 einhergeht, resultiert - wie zuvor geschildert - gewissermaßen ein stabiler Schichtverbund mit einem festen Schichtgefüge, bei welchem die einzelnen Schichten, insbesondere das Flächenmaterial 4 und der Träger 3, unverschiebbar miteinander verbunden sind, so daß nach dem Abkühlen des Formteillaminats 1 die besagten Schichten nicht mehr auf- bzw. gegeneinander verschiebbar sind. Da im allgemeinen zur Verfestigung der Schichtstruktur ein Abkühlen des Formteillaminats 1 auf Raumtemperatur ausreicht, sind erfindungsgemäß keine weiteren Abkühl- bzw. Kühlvorrichtungen notwendig. Sie können jedoch gleichermaßen vorgesehen sein, insbesondere zu Zwecken der Beschleunigung des Abkühlvorgangs.

Erfindungsgemäß bevorzugt wird bei der Umformung derart verfahren, daß das Werkstoffteil 6 oberhalb des Erweichungspunkts zumindest einer der Schichten, insbesondere des Trägers 3, erwärmt wird, so daß das vorzugsweise thermoplastische Material des Trägers 3 gewissermaßen umformbar wird. Zudem ist die Erwärmungstemperatur bei der Umformung derart auszuwählen, daß eine Auflaminierung bzw. ein Laminieren während der Umformung erfolgen kann. Beispielsweise kann die Temperatur derart gewählt werden, daß zumindest eine Schicht des Schichtaufbaus 2 bzw. des Werkstoffteils 6 zumindest an deren Oberfläche hitzeklebrig wird. Bei gegebenenfalls vorgesehener Verwendung von Laminiermitteln sollte - wie nachfolgend noch ausführlich geschildert - die Umformungstemperatur derart gewählt werden, daß das entsprechende Laminiermittel flüssig bzw. zähflüssig bzw. hochviskos wird und somit eine gewisse Klebrigkeit ausbildet.

Was das erfindungsgemäße Verfahren weiterhin betrifft, so erfolgt zumindest im wesentlichen ein vollständiges Auflaminieren des Flächenmaterials 4 auf den Träger 3. Mit anderen Worten erfolgt die Laminierung im wesentlichen vollständig bzw. vollflächig im Sinne der oben beschriebenen Definition, was auch eine diskontinuierliche Laminierung umfassen kann.

Gemäß einer erfindungsgemäß bevorzugten Ausführungsform können das Flächenmaterial 4 und der Träger 3 vor dem Umformen vorlaminiert werden, so daß gewissermaßen bereits vor der Umformung ein stabiler Schichtverbund eingesetzt werden kann. Diesbezüglich kann die Vorlaminierung derart erfolgen, daß das Flächenmaterial 4 mit dem Träger 3 zumindest abschnittsweise oder vollflächig verbunden bzw. laminiert ist, insbesondere wie zuvor definiert. Durch die Vorlaminierung wird beispielsweise gewährleistet, daß sich die einzelnen Schichten nicht bereits vor der Umformung zu dem Formteillaminat 1 verschieben können. Mit anderen Worten können im Rahmen des erfindungsgemäßen Verfahrens bereits vor dem Umformen fertig laminierte Werkstoffteile 6 eingesetzt werden, wobei die Umformparameter, insbesondere die Umformtemperaturen, derart zu wählen sind, daß die bereits bestehende Laminierung derart gelöst bzw. verändert wird, daß während des Umformens ein Verschieben der jeweiligen Schichten möglich wird.

So kann es im Rahmen des erfindungsgemäßen Verfahrens vorgesehen sein, daß die Vorlaminierung des Flächenmaterials 4 auf den Träger 3 bei der Umformung insbesondere durch Erwärmung gelöst wird. Dabei sollte die Erwärmung derart erfolgen, daß der Träger 3 und das Flächenmaterial 4 während der Umformung auf- und/oder gegeneinander verschoben werden. Dies kann beispielsweise und in nichtbeschränkender Weise derart geschehen, daß die Temperatur bei der Umformung so ausgewählt wird, daß das zur Vorlaminierung verwendete Laminiermittel entsprechend verflüssigt oder in einen hochviskosen bzw. zähflüssigen Zustand gebracht wird, so daß auf diese Weise gewissermaßen ein Aufeinandergleiten bzw. ein Verschieben der jeweiligen Schichten möglich wird. Bei Verwendung eines bereits vorlaminierten Werkstoffteils 6 wird im Rahmen des erfindungsgemäßen Verfahrens somit mit anderen Worten eine bereits bestehende Laminierung bzw. Verklebung gelöst und nach Umformung bzw. nach Beendigung des Umformvorgangs - vorzugsweise durch Abkühlen - und somit nach Verschiebung der einzelnen Schichten erneut ausgebildet.

Was die Vorlaminierung des Flächenmaterials 4 auf den Träger 3 anbelangt, so kann diese im Rahmen des erfindungsgemäßen Verfahren auch infolge der Eigenklebrigkeit, insbesondere Hitzeklebrigkeit, des Trägers 3 erfolgen. Gemäß dieser Ausführungsform wird somit während der Umformung zumindest die in Kontakt mit dem Flächenmaterial 4 stehende Oberfläche des Trägers 3 durch Erwärmen in einen hitzeklebrigen Zustand gebracht, wobei die Erwärmung derart auszuwählen ist, daß das Flächenmaterial 4 und der Träger 3 während der Umformung auf- bzw. gegeneinander verschoben werden. Mit anderen Worten wird derart erwärmt, daß bereits bestehende Laminierungen zumindest teilweise gelöst werden, so daß eine Verschiebung der jeweiligen Schichten auf- bzw. gegeneinander ermöglicht wird. Nach Beendigung der Umformung wird dann vorzugsweise abgekühlt, so daß das Flächenmaterial 4 und der Träger 3 nach Umformung unverschiebbar miteinander verbunden sind.

Gemäß dieser Ausführungsform erfolgt die Laminierung des Flächenmaterials 4 auf den Träger 3 während der Umformung infolge der Eigenklebrigkeit, insbesondere der Hitzeklebrigkeit, des Trägers 3.

Gemäß einer alternativen erfindungsgemäßen Ausführungsform kann im Rahmen des erfindungsgemäßen Verfahrens - wie zuvor beschrieben - eine Vorlaminierung des Flächenmaterials 4 auf den Träger 3 auch mittels eines Laminiermittels, insbesondere Klebstoffs, erfolgen. Gemäß dieser Ausführungsform wird das Laminiermittel während der Umformung durch Erwärmen in einen flüssigen, insbesondere zähflüssigen bzw. hitzeklebrigen Zustand gebracht derart, daß das Flächenmaterial 4 und der Träger 3 während der Umformung auf- und/oder gegeneinander verschoben werden; d. h. mit anderen Worten werden bereits bestehende Laminierungen zumindest teilweise gelöst, um eine Verschiebung der jeweiligen Schichten bei der Umformung zu ermöglichen. Nach Beendigung der Umformung wird auch in diesem Fall abgekühlt, so daß ein stabiler Verbund resultiert, dessen Schichten unverschiebbar miteinander verbunden sind.

Gemäß dieser Ausführungsform, bei welcher zur Vorlaminierung ein Laminiermittel verwendet wird, wird die Umformtemperatur somit derart ausgewählt, daß das zwischen dem Flächenmaterial 4 und dem Träger 3 angeordnete bzw. applizierte Laminiermittel derart verändert wird, daß sich die bestehende Laminierung zumindest teilweise löst, so daß eine Verschiebung der jeweiligen Schichten bei Umformung möglich wird.

Nach Beendigung der Umformung bzw. des Umformvorgangs werden die jeweiligen Schichten, insbesondere das Flächenmaterial 4 und der Träger 3, durch Abkühlen unverschiebbar miteinander verbunden, so daß ein festes Schichtgefüge ausgebildet wird. Mit anderen Worten werden die zuvor genannten Schichten durch die Abkühlung erneut laminiert bzw. überhaupt laminiert.

Das erfindungsgemäße Verfahren umfaßt weiterhin eine derartige Ausführungsform, bei welcher das Flächenmaterial 4 vor der Umformung unverbunden auf den Träger 3 aufgelegt wird. Diesbezüglich ist der Begriff "unverbunden" derart zu verstehen, daß die Schichten nicht dauerhaft miteinander verbunden sind, was beispielsweise durch ein einfaches Aufeinanderlegen der Schichten, beispielsweise mit einhergehender bzw. zuvor durchgeführter Applikation eines Schmelzklebers bzw. Laminiermittels erfolgen kann, wobei gemäß dieser Ausführungsform das gegebenenfalls vorhandene Laminiermittel während des Zusammenlegens der Schichten nichtklebrig ist. Somit bezieht sich der Begriff "unverbunden" auf solche Ausführungsformen, bei welchen die Schichten des umzuformenden Werkstoffteils 6 miteinander gegebenenfalls über eine zuvor applizierte, beim Aufeinanderlagern der Schichten nichtklebrigen Laminiermittelschicht miteinander in Kontakt stehen, wobei die einzelnen Schichten nicht miteinander verklebt sind.

Gemäß dieser Ausführungsform kann das erfindungsgemäße Verfahren auch derart durchgeführt werden, daß die Laminierung während der Umformung des Flächenmaterials 4 auf den Träger 3 infolge der Eigenklebrigkeit, insbesondere Hitzeklebrigkeit des Trägers 3, erfolgt. Dies ist insbesondere dann der Fall, wenn zwischen den einzelnen Schichten zuvor kein Laminiermittel appliziert wurde. Das Laminieren mittels der Eigenklebrigkeit kann dabei derart erfolgen, daß während der Umformung zumindest die in Kontakt mit dem Flächenmaterial 4 stehende Oberfläche des Trägers 3 durch Erwärmen in einen hitzeklebrigen Zustand gebracht wird, so daß hierdurch die Laminierung gewissermaßen gebildet wird bzw. entsteht. Anschließend wird nach Beendigung der Umformung abgekühlt, so daß die Laminierung aushärtet und auf diese Weise ein fester bzw. unverschiebbarer Schichtverbund resultiert.

Sofern für das erfindungsgemäße Verfahren ein Werkstoffteil 6 mit unverbundenen Schichten eingesetzt wird, kann es - wie zuvor geschildert - vorgesehen sein, daß zwischen den Schichten, insbesondere zwischen dem Flächenmaterial 4 und dem Träger 3, zusätzlich ein Laminiermittel vor dem Aufeinanderlegen der Schichten und vor dem Umformen angeordnet bzw. appliziert wird, insbesondere wobei das Laminiermittel auf das Flächenmaterial 4 bzw. den Träger 3 aufgetragen wird. Dabei kann das Laminiermittel entweder auf eine Oberfläche des Trägers 3 und/oder auf eine Oberfläche des Flächenmaterials 4 appliziert werden. Sofern im Rahmen der vorliegenden Erfindung mehrere bzw. zusätzliche Schichten vorgesehen sind, können die jeweiligen Schichten auch beidseitig mit dem Laminiermittel beaufschlagt werden. Als Laminiermittel kommen diesbezüglich die zuvor genannten Laminiermittel in Betracht. Gleichermaßen ist es möglich, daß zwischen den jeweiligen Schichten ein Schmelzkleberweb gelegt wird. Gemäß dieser Ausführungsform, bei welcher zwischen den unverbundenen Schichten ein Laminiermittel vorhanden ist, kommt die Laminierung somit während der Umformung durch zuvor applizierte Laminiermittel zustande, insbesondere wobei die Laminierung während der Umformung des Flächenmaterials 4 auf den Träger 3 infolge der Überführung des Laminiermittels durch Erwärmen in einen flüssigen, insbesondere zähflüssigen oder hitzeklebrigen Zustand erfolgt. Mit anderen Worten ist die Umformtemperatur derart auszuwählen, daß das Laminiermittel in einen flüssigen, insbesondere zähflüssigen und/oder hitzeklebrigen Zustand während des Umformens gebracht wird. Auch gemäß dieser Ausführungsform wird nach Beendigung der Umformung abgekühlt, so daß ein Formteillaminat 1 mit einem Schichtverbund resultiert, dessen Schichten unverschiebbar miteinander verbunden sind.

Somit erfolgt auch bei der Ausführungsform, gemäß welcher die Schichten des Werkstoffteils 6 vor der Umformung unverbunden sind und bei welcher gegebenenfalls zwischen den unverbundenen Schichten ein Laminiermittel vorliegt, nach dem Umformen des Formteillaminats 1 ein Abkühlen, so daß das Flächenmaterial 4 und der Träger 3 durch Abkühlen unverschiebbar miteinander verbunden werden.

Im allgemeinen sollte die Temperatur bei der Umformung im Rahmen des erfindungsgemäßen Verfahrens zudem derart gewählt werden, das sie oberhalb des Erweichungspunktes des vorzugsweise thermoplastischen Trägers 3 liegt, um eine optimale Umformung des Werkstoffteils 6 zu dem erfindungsgemäßen Formteillaminat 1 zu ermöglichen.

Was den Träger 3 betrifft, so kann als Träger 3 ein Schaumstoff, insbesondere auf Basis von Polyolefinen oder Polyurethanen, insbesondere Polyolefinen, verwendet werden, wobei als Träger 3 insbesondere ein geschlossenporiger und/oder geschlossenzelliger Schaumstoff verwendet werden kann. Erfindungsgemäß sind Schaumstoffe auf Basis von Polyolefinen bevorzugt. Gleichermaßen kann erfindungsgemäß auch ein peroxidisch vernetzbarer Polyethylenschaum eingesetzt werden. Der Schaumstoff kann gleichermaßen thermoverformbar sein, wobei die Erweichungstemperatur derart ausgewählt sein sollte, daß der Schaumstoff bei der Umformung des Werkstoffteils 6 zu dem Formteillaminat 1 nach der Erfindung nicht zerstört bzw. der Schaumstoff nicht zu stark komprimiert wird. Der Schaumstoff sollte zumindest derart beschaffen sein, daß er aufgrund seiner Elastizität im Rahmen der Herstellung des erfindungsgemäßen Formteillaminats 1 und der Verwendung des Werkstoffteils 6 in die gewünschte Form gebracht werden kann. Sofern - wie nachfolgend beschrieben - auf den Träger 3 auf der dem Flächenmaterial 4 abgewandten Seite ein weiterer Träger 3' laminiert ist, welcher vorzugsweise ein nichtporöser Thermoplast ist, wird der Träger 3 und/oder das Flächenmaterial 4 von dem Träger 3' gewissermaßen in der resultierenden Endform gehalten.

Der Träger 3 kann erfindungsgemäß bevorzugt ein geschlossenporiger bzw. geschlossenzelliger Schaumstoff sein, welcher im allgemeinen eine geringere Komprimierbarkeit als offenporige Schäume aufweist und bei Verwendung des erfindungsgemäßen Formteillaminats 1 eine optimale elastische und reversible Komprimierbarkeit unter Belastung aufweist. Beispielsweise liegt unter Beanspruchung bei einer Sitzbelastung ("Hinsetzen") eine Komprimierung des Schaumstoffs vor, so daß aufgrund der guten Anpassung an den Benutzer ein angenehmes und bequemes Sitzgefühl resultiert, während nach Belastung ("Aufstehen") der Schaumstoff seine ursprüngliche Dicke wieder einzunehmen imstande ist.

Sofern der Träger 3 als Schaumstoffschicht ausgebildet ist, kann dieser eine Dicke von 1 bis 50 mm, insbesondere 2 mm bis 40 mm, vorzugsweise 3 mm bis 30 mm, bevorzugt 4 mm bis 25 mm, besonders bevorzugt 5 mm bis 20 mm, aufweisen, wobei die Dicke - in Abhängigkeit von dem gewünschten Einsatzbereich - in weiten Bereichen variieren und gegebenenfalls von den angegebenen Bereichen abweichen kann. Was die Rohdichte des Trägers 3, insbesondere der Schaumstoffschicht, anbelangt, so kann diese 5 bis 250 kg/m³, insbesondere 10 bis 150 kg/m³, vorzugsweise 20 bis 100 kg/m³, bevorzugt 25 bis 95 kg/m³, betragen.

Darüber hinaus kann der Träger 3 jedoch auch ein bei Gebrauchstemperatur, insbesondere bei Raumtemperatur (25 °C) und Atmosphärendruck harter Thermoplast sein. Somit sollte der Träger 3 beim Raumtemperatur (25 °C) und Atmosphärendruck zumindest formstabil bzw. selbsttragend sein. Insbesondere sollte der thermoplastische Träger 3 gemäß dieser Ausführungsform dergestalt sein, daß nach Durchführung des Umformverfahrens zur Herstellung des erfindungsgemäßen Formteillaminats 1 die durch das insbesondere textile Flächenmaterial 4 bzw. durch gegebenenfalls weitere Träger 3 bzw. 3' gegebenenfalls vorhandene Rückstellkräfte zumindest im wesentlichen nicht zu einer Formveränderung des Formteillaminats 1 führen.

Gemäß dieser Ausführungsform ist der Träger 3 vorzugsweise nichtporös bzw. nichtgeschäumt ausgebildet. Mit anderen Worten ist der Träger 3 gemäß dieser erfindungsgemäßen Ausführungsform massiv bzw. als solcher hohlraumfrei. Hierdurch wird eine besonderes gute Formstabilität bzw. mechanische Stabilität erreicht. Im Rahmen der vorliegenden Erfindung kann das Material des nichtporösen Trägers 3 aus Polymeren bzw. Copolymeren ausgewählt sein. Diesbezüglich kommen vorzugsweise Polyolefine, Vinylpolymere, Polyamide, Polyester, Polycarbonate bzw. Polyurethane in Betracht. Gemäß einer erfindungsgemäß bevorzugten Ausführungsform umfaßt das Material des Trägers 3 Polyolefine, insbesondere Polyethylen oder Polypropylen, besonders bevorzugt Polypropylencopolymerisate oder aber Acrylnitril/Butadien/Styrol-Copoylmerisate (ABS-Copolymerisate). Für weitere Einzelheiten in bezug auf Thermoplaste kann verwiesen werden auf Römpp Chemielexikon, 3. Auflage, Band 6, 1999, Georg Thieme Verlag, Stuttgart/New York, Seiten 4505/4506, Stichwort: "Thermoplaste", dessen gesamter Offenbarungsgehalt einschließlich der dort genannten Literaturstellen hiermit durch Bezugnahme eingeschlossen ist.

Die Dicke des Trägers 3 kann in bezug auf die Ausführungsform, nach welcher der Träger 3 als nichtporöser Träger 3 ausgebildet ist, in weiten Bereichen variieren. Erfindungsgemäß bevorzugt kann der Träger 3 diesbezüglich eine Dicke von 1 mm bis 20 mm, vorzugsweise 1,5 mm bis 5 mm, bevorzugt 2 mm bis 10 mm, besonders bevorzugt 2,5 mm bis 7 mm, ganz besonders bevorzugt 3 mm bis 5 mm, aufweisen. Allerdings kann von diesen Werten anwendungsbezogen oder einzelfallbedingt abgewichen werden, beispielsweise wenn das Werkstoffteil 6 im Rahmen eines erfindungsgemäßen Formteillaminats 6 beispielsweise zur Herstellung von besonders belastbaren Möbeln verwendet werden soll, wobei die Dicke des Trägers 3 dann 15 mm übersteigen kann.

Was das im Rahmen des erfindungsgemäßen Verfahren verwendete Flächenmaterial 4 anbelangt, so kann dieses ein textiles Flächenmaterial, insbesondere ein Gewebe, Gewirke, Gestricke oder Gelege, vorzugsweise ein Gewebe, sein. Darüber hinaus ist es jedoch gleichermaßen möglich, daß das Flächenmaterial 4 beispielsweise ein Leder oder ein Kunstleder ist. Gleichermaßen kommen als Flächenmaterial 4 auch folienartige Kunststoffe und dünnwandige Metallfolien in Betracht. Insbesondere kann das Flächenmaterial 4 derart ausgewählt sein, daß es zumindest im wesentlichen lichtdicht ist.

Das Flächengewicht des Flächenmaterials 4 kann in großen Bereichen variieren. So kann das Flächenmaterial 4 ein Flächengewicht von 25 bis 600 g/m², insbesondere 50 bis 500 g/m², vorzugsweise 100 bis 400 g/m², aufweisen.

Gemäß einer erfindungsgemäß bevorzugten Ausführungsform ist das Flächenmaterial 4 reversibel dehnfähig und/oder insbesondere bielastisch, d. h. in beiden Richtungen dehnbar, bzw. hochelastisch. Dabei kann das Flächenmaterial 4 eine Dehnbarkeit in mindestens eine Richtung, vorzugsweise in Längs- und Querrichtung, von mindestens 5 %, insbesondere mindestens 10 %, vorzugsweise mindestens 20 %, aufweisen, um den beim Umformen gegebenenfalls auftretenden Längen- und Breitenänderungen ohne Zerreißen folgen zu können.

Gemäß einer erfindungsgemäß besonders bevorzugten Ausführungsform wird als Flächenmaterial 4 ein insbesondere bielastisches textiles Gewebe eingesetzt, welches beispielsweise eine Elastizität in Kettrichtung von etwa 35 % oder mehr und in Schußrichtung eine Elastizität von 20 % oder mehr aufweist. Zur Herstellung eines solchen bielastischen Gewebes können beispielhaft und in nichtbeschränkender Weise spezielle elastische Zwirne eingesetzt werden, wie sie beispielsweise in der auf die Anmelderin selbst zurückgehenden EP 0 036 948 A1 beschrieben sind, deren gesamter Offenbarungsgehalt hiermit durch Bezugnahme eingeschlossen ist. Hierbei handelt es sich insbesondere um einen elastischen Zwirn, bei welchem ein Elastomerfaden von etwa 140 bis 200 Denier mit zwei Garnen, deren Stärke jeweils etwa ein Zehntel des Elastomerfadens beträgt, haftend verzwirnt ist, wobei als Garne vorzugsweise im Rotorverfahren hergestellte OE-Garne ("Offenes-Ende-Garne") aus Polyvinylchlorid-, Polyvinylcyanid-, Polyacrylnitril- und/oder Wollfäden verwendet werden. Gleichermaßen kann erfindungsgemäß ein bielastisches Gewebe verwendet werden, welches in der ebenfalls auf die Anmelderin selbst zurückgehenden DE 28 57 498 C2 beschrieben ist, deren Inhalt hiermit durch Bezugnahme vollumfänglich eingeschlossen ist.

Gemäß einer besonders bevorzugten Ausführungsform kann ein bielastisches Gewebe verwendet werden, welches ein Gewicht von 350 g/m² bei einer Elastizität in Kettrichtung von mindestens 35 % und einer Elastizität in Schußrichtung von mindestens 20 % aufweist. Ein derartiges Gewebe kann, bezogen auf das Gesamtgewicht des Gewebes, beispielsweise etwa 4,8 % Elastan^{®}, etwa 89,3 % Polyester und etwa 5,9 % Polyamid umfassen. Erfindungsgemäß ist es gleichermaßen möglich, daß das Flächenmaterial 4 zusätzlich imprägniert, beschichtet oder dergleichen ist, um das Flächenmaterial 4 beispielsweise flammhemmend auszurüsten bzw. um die Schmutzabweisung zu erhöhen.

Wie zuvor beschrieben, ist die vorliegende Erfindung nicht auf eine 2-Schicht-Struktur des erfindungsgemäßen Formteillaminats 1 beschränkt. Wie Fig. 2A zu entnehmen ist, kann es erfindungsgemäß vorgesehen sein, daß vorzugsweise auf der dem Flächenmaterial 4 abgewandten Seite des Trägers 3 ein weiterer Träger 3' angeordnet ist. Was die Ausbildung des Trägers 3 bzw. 3' anbelangt, so können diese gleichartig oder verschieden voneinander sein. Gemäß einer erfindungsgemäß besonders bevorzugten Ausführungsform wird der Träger 3, auf welchem das Flächenmaterial 4 angeordnet ist, als ein Schaumstoff ausgebildet, insbesondere wie zuvor definiert, während der auf der dem Flächenmaterial 4 abgewandten Seite des Träger 3 auflaminierte weitere Träger 3' ein nichtporöser und/oder nichtgeschäumter thermoplastischer Träger, insbesondere wie zuvor definiert, ist. Gemäß dieser Ausführungsform ist der Träger 3 somit gewissermaßen als Zwischenschicht 5 ausgebildet.

Weiterhin kann es erfindungsgemäß vorgesehen sein, daß auf der dem Träger 3 abgewandten Seite des Trägers 3' ein weiterer Träger 3", welcher in bezug auf die zuvor genannten Träger gleichartig oder aber verschiedenartig ausgebildet werden kann, und/oder ein weiteres Flächenmaterial 4', insbesondere wie zuvor definiert, angeordnet bzw. auflaminiert wird bzw. werden. Auch in diesem Fall fungiert der Träger 3 dann gewissermaßen als Zwischenschicht 5, welche bevorzugt als Schaumstoff ausgebildet ist. Dieser Schaumstoff bildet dann gewissermaßen den Kern der Laminatstruktur.

Gemäß einer weiteren erfindungsgemäßen Ausführungsform kann das Formteillaminat 1 einen Träger 3 umfassen, wobei der Träger 3 ein wie zuvor definierter Schaumstoff sein kann. Auf dem Träger 3 wird gemäß dieser Ausführungsform ein insbesondere wie zuvor definiertes Flächenmaterial 4 auflaminiert. Gemäß dieser Ausführungsform ist auf der dem Flächenmaterial 4 abgewandten Seite des Trägers 3 ein weiterer Träger 3' auflaminiert, wobei es sich hierbei vorzugsweise um einen nichtporösen Träger auf Basis eines thermoplastischen Materials, insbesondere wie zuvor definiert, handelt.

Was die erfindungsgemäßen Ausführungsform mit mehr als zwei Schichten betrifft, so gelten diesbezüglich die zuvor in bezug auf das erfindungsgemäße Verfahren angeführten Ausführungen betreffend die 2-Schicht-Struktur entsprechend. Mit anderen Worten ist auch bei einer Schichtstruktur mit mehr als zwei Schichten prinzipiell ein Verschieben der jeweiligen Schichten während der Umformung vorgesehen und zwar dahingehend, daß die einzelnen Schichten aufgrund der zuvor geschilderten Verfahrensdurchführung während der Umformung auf- und/oder gegeneinander verschoben werden. Wie zuvor für die zweischichtige Ausführung beschrieben, kann die einzelnen Schichten auch im Falle einer vielschichtigen Ausführung vorlaminiert sein, beispielsweise aufgrund der Hitzeklebrigkeit und/oder der Verwendung eines Laminiermittels. Gleichermaßen ist es aber auch möglich, daß ein vielschichtiges Werkstoffteil 6 dem erfindungsgemäßen Verfahren zur Ausbildung eines vielschichtigen Formteillaminats 1 mit fester Schichtstruktur unterzogen wird, bei welchen die jeweiligen Schichten unverbunden im vorgenannten Sinne sind.

Für weitere Ausführungen betreffend das Flächenmaterial 4 sowie den Träger 3, welcher gemäß einer alternativen erfindungsgemäßen Ausführungsform als Zwischenschicht 5 ausgebildet sein kann, sowie betreffend den gegebenenfalls vorhandenen Träger 3', kann auf die auf die Anmelderin selbst zurückgehenden deutschen Patentanmeldungen DE 10 2005 054 062 vom 10. November 2005 und DE 10 2005 054 063 vom 10. November 2005 bzw. die hierzu parallelen US-Patentanmeldungen mit den Seriennummern 11/430,802 ("Multilayered Material Part and Formed Part Produced Therefrom") und 11/430,318 ("Structural Unit in the Form of a Cavity-Formed Part, and Use ("Structural Unit in the Form of a Cavity-Formed Part, and Use Thereof') verwiesen werden, deren gesamter Offenbarungsgehalt hiermit durch Bezugnahme vollumfänglich eingeschlossen ist.

Was das erfindungsgemäße Verfahren anbelangt, so kann es vorgesehen sein, daß das Werkstoffteil 6 bei der Umformung insbesondere an den Randbereichen des Werkstoffteils 6 in einem dem Fachmann zu diesem Zweck hinlänglich bekannten Halterahmen befestigt bzw. fixiert wird. Der Halterahmen dient gewissermaßen der Fixierung des Werkstoffteils 6 und/oder dessen Vorspannung, bevor das Werkstoffteil 6 mittels des zuvor beschriebenen Stempels in die Form gedrückt bzw. gezogen wird. Der Halterahmen ist somit gewissermaßen als Spann- bzw. Fixierrahmen ausgebildet. Gemäß dieser erfinddungsgemäßen Ausführungsform, bei welcher zur Umformung des Werkstoffteils 6 in das Formteillaminat 1 ein Halterahmen verwendet wird, kann es vorzugsweise vorgesehen sein, daß das Werkstoffteil 6 derart in den Halterahmen eingesetzt wird, daß das Flächenmaterial 4 bei der Umformung verschoben wird. Mit anderen Worten wird der Halterahmen derart eingestellt, daß das Flächenmaterial 4 durch den Halterahmen nicht vollständig fixiert bzw. eingeklemmt wird, so daß das Flächenmaterial 4 bei der Umformung gewissermaßen auch in den von dem Halterahmen fixierten Randbereichen des Werkstoffteils 6 gleiten bzw. fließen kann. Denn hierdurch wird die Gesamtverschiebbarkeit des Flächenmaterials 4 in bezug auf den Träger 3 beim Umformen zusätzlich verbessert, wodurch besonders gute Resultate hinsichtlich des erfindungsgemäßen Formteillaminats 1 erreicht werden.

Was die Dimensionierung des Flächenmaterials 4 bzw. des Trägers 3 und/oder des Trägers 3' anbelangt, so kann es erfindungsgemäß vorgesehen sein, daß die vorgenannten Schichten flächenbezogen gleiche Ausmaße bzw. Dimensionierungen aufweisen, so daß die Schichten gewissermaßen deckungsgleich im Werkstoffteil 6 angeordnet sind. Dabei kann es vorgesehen sein, daß die Randbereiche der Schichten 4, 3, 3' nichtlaminiert sind, so daß die Randbereiche des Flächenmaterials 4 bzw. des Trägers 3 gewissermaßen von dem gegebenenfalls vorhandenen Träger 3' ab- bzw. hochklappbar sind. Die Nichtlaminierung der Randbereiche ist nicht auf die vorgenannten Schichten beschränkt. So kann gleichermaßen eine Nichtlaminierung der Randbereiche der gegebenenfalls vorhandenen Schichten 3" und/oder 4' realisiert werden.

Gemäß einer weiteren Ausführungsform wird das Flächenmaterial 4 flächenbezogen kleiner dimensioniert als der Träger 3 und/oder der gegebenenfalls vorhandene Träger 3', insbesondere wobei sich der Träger 3 und/oder 3' flächenbezogen über mindestens einen Rand des Flächenmaterials 4 erstreckt bzw. erstrecken derart, daß das Flächenmaterial 4 nicht von dem Halterahmen aufgenommen bzw. fixiert wird. Denn dadurch, daß insbesondere das Flächenmaterial 4 nicht von dem Halterahmen aufgenommen bzw. fixiert wird, ist es erfindungsgemäß möglich, daß während der Umformung des Werkstoffteils 6 in das erfindungsgemäße Formteillaminat 1 ein besonders gutes "Nachfließen" bzw. "Nachgleiten" des Flächenmaterials 4 erreicht wird.

Weiterhin kann es gemäß dem erfindungsgemäßen Verfahren vorgesehen sein, daß gleichzeitig ein erstes Werkstoffteil 6a zu einem ersten Formteillaminat 1a und ein zweites Werkstoffteil 6b zu einem zweiten Formteillaminat 1b umgeformt werden und das erste Formteillaminat 1a und das zweite Formteillaminat 1b derart miteinander verbunden werden, daß die Formteillaminate 1a, 1b eine Baueinheit 7 mit mindestens einem Hohlraum ausbilden. Gemäß dieser speziellen Ausgestaltung des zuvor beschriebenen erfindungsgemäßen Verfahrens kann das Umformen zur Herstellung der Baueinheit 7 mittels Thermoformen, insbesondere mittels dem sogenannten Twin-Sheet-Thermoformen durchgeführt werden. Für weitere diesbezügliche Ausführungen betreffend das Twin-Sheet-Thermoformen kann verwiesen werden auf die auf die Anmelderin selbst zurückgehende Patentanmeldung DE 10 2005 054 063 vom 10. November 2005, deren gesamter Offenbarungsgehalt hiermit durch Bezugnahme eingeschlossen ist. Auch im Rahmen des sogenannten Twin-Sheet-Verfahrens wird das Flächenmaterial 4 während der Umformung des Werkstoffteils 6 auf den Träger 3 auflaminiert derart, daß der Träger 3 und das Flächenmaterial 4 während der Umformung zu einer Baueinheit 7 gewissermaßen zusammengefaßte Formteillaminate 1a, 1b resultieren, bei denen jeweils das Flächenmaterial 4 und der Träger 3 unverschiebbar miteinander verbunden sind.

Schließlich betrifft die vorliegende Erfindung - gemäß einem weiteren Gegenstand der vorliegenden Erfindung - ein Formteillaminat 1, insbesondere für die Herstellung von Möbeln, dekorativen Elementen, Hohlraumkanälen, Zubehörteilen beispielsweise für Automobile und dergleichen, welches nach dem erfindungsgemäßen Verfahren erhältlich ist. Das erfindungsgemäße Formteillaminat 1 weist den Vorteil auf, daß es aufgrund der spezifischen Verfahrensweise gegenüber dem Stand der Technik über signifikant verbesserte Produkteigenschaften verfügt. So weist das erfindungsgemäße Formteillaminat 1 eine signifikant verringerte Falten- bzw. Blasenbildung und eine deutlich verminderte Delaminierung auf. Zudem liegen in bezug auf das erfindungsgemäße Formteillaminat 1 aufgrund der Verschiebbarkeit der jeweiligen Schichten während der Umformung gewissermaßen geringere Rückstellkräfte vor, da die einzelnen Schichten aufgrund der Möglichkeit des "Nachfließens" bzw. des "Nachgleitens" während der Herstellung mit einer geringeren Spannung aufgetragen bzw. laminiert werden. Somit weist das erfindungsgemäße Formteillaminat 1 eine deutlich verbesserte Delaminierungsbeständigkeit als auch eine signifikant verbesserte Formstabilität auf.

Das erfindungsgemäße Formteillaminat kann insbesondere für oder zur Herstellung von Möbeln, insbesondere Sitzmöbeln, bzw. Einrichtungsgegenständen zu Zwecken einer Innengestaltung gewissermaßen als Interieur sowie zu Zwecken einer Außengestaltung gewissermaßen als Exterieur eingesetzt werden. Insbesondere eignen sich die erfindungsgemäßen Formteillaminate zur Herstellung von Sitzmöbeln, wobei der Begriff "Sitzmöbel" sehr breit zu verstehen ist: So betrifft der Begriff "Sitzmöbel" Sitzgelegenheiten bzw. Sitzelemente aller Art, wie beispielsweise und in nichtbeschränkender Weise Bänke, Stühle, Sessel, Sofas, Couchgarnituren, Hocker und dergleichen. Dabei kann das Sitzmöbel dergestalt sein, daß es aus einem erfindungsgemäßen Formteillaminat besteht oder zumindest ein Formteillaminat aufweist.

Weiterhin kann das erfindungsgemäße Formteillaminat auch für Sättel, wie Fahrradsättel und dergleichen verwendet werden, insbesondere da das erfindungsgemäße Formteillaminat z. B. starke Biegungen bzw. ausgeformte Bereiche aufweisen kann, so daß problemlos eine Anpassung des aus dem erfindungsgemäßen Formteillaminats hergestellten Sattels an die Anatomie des Benutzers erfolgen kann. Ein weiterer Anwendungsbereich ist beispielsweise die Verwendung des erfindungsgemäßen Formteillaminat für Sitzmöbel in öffentlichen Verkehrsmitteln, da aufgrund der zuvor beschriebenen spezifischen Schichtstruktur mit der flächigen Laminierung eine hohe Schmutzresistenz resultiert. Zudem kann das erfindungsgemäße Formteillaminat als dekoratives Element beispielsweise in Form von Kabelverkleidungen, Trennwänden, Abdeckung und dergleichen verwendet werden. Grundsätzlich kann das erfindungsgemäße Formteillaminat auch im Bereich der Automobilindustrie, beispielsweise als Kraftfahrzeugtürverkleidungen, Armaturenbretter und dergleichen, eingesetzt werden.

Das erfindungsgemäße Verfahren zur Herstellung eines Formteillaminats sowie die Formteillaminate als solche und daraus hergestellte Einrichtungsgegenstände, wie Möbel, insbesondere Sitzmöbel, weisen zahlreiche Vorteile auf, von denen rein beispielhaft die folgenden genannt werden sollen:
- Aufgrund der speziellen erfindungsgemäßen Verfahrensführung, bei welcher während des Umformens ein "Nachfließen" bzw. "Nachgleiten" insbesondere des Flächenmaterials ermöglicht wird, wird wirkungsvoll verhindert, daß einzelne Schichten beim Umformen einer übermäßigen Beanspruchung durch Dehnen bzw. Stauchen ausgesetzt werden. Auf diese Weise wird einer Faltenbildung, Delaminierung bzw. einer Rißbildung und/oder einem Zerreißen einzelner Schichten in effektiver Weise entgegengewirkt.
- Aufgrund des erfindungsgemäßen Verfahrens wird die Ausschußquote bei der Produktion der erfindungsgemäßen Formteillaminate signifikant verringert, da eine Falten- bzw. Blasenbildung, Delaminierung bzw. Rißbildung bei der Umformung unterbunden wird.
- Die Herstellung des Formteillaminats nach der Erfindung umfaßt eine geringe Anzahl an Verfahrensschritten einem minimierten Werkzeugaufwand, so daß es sich um ein äußerst kostengünstiges Herstellungsverfahren handelt.
- Mit Hilfe des erfindungsgemäßen Verfahrens können vollständige Einheiten eines Möbels, beispielsweise ein Sitz-/Rückenteil eines Sitzmöbels, mit einer geringen Anzahl an Arbeitsschritten zum Erhalt der gewünschten Endform hergestellt werden.
- Durch den optional vorgesehenen, massiven thermoplastischen Träger weist das erfindungsgemäße Formteillaminat nach Verformung selbsttragende Funktionen auf, was ihm eine hohe Bedeutung insbesondere in bezug auf Sitzsysteme zukommen läßt.
- Mit Hilfe des erfindungsgemäßen Verfahrens können zahlreiche unterschiedliche Formen bzw. Strukturen realisiert werden, so daß das erfindungsgemäße Formteillaminat in weiten Bereichen eingesetzt werden kann.
- Durch die individuelle Ausgestaltung der einzelnen Schichten ist eine hohe Variation und Auswahl der jeweiligen Produkteigenschaften möglich - bei gleichzeitig hoher Attraktivität und individueller Gestaltbarkeit der Oberfläche (Stoffbezug).
- Aufgrund des erfindungsgemäßen Prinzips, wonach das insbesondere textile Flächenmaterial auf die Trägerschicht während des Umformens auflaminiert wird, wird ein gewissermaßen fertig ausgestaltetes Produkt nach dem Umformungsprozeß erhalten, so daß ein nachträgliches "Aufspannen" weiterer Schichten, was häufig mit einer Delaminierung und Faltenbildung verbunden ist, vollständig vermieden wird.
- Aufgrund des speziellen Schichtaufbaus mit einem vorzugsweise thermoplastischen und massiven Träger weisen die erfindungsgemäßen Formteillaminate eine hohe Stabilität auf, so daß sie für zahlreiche Anwendungen anwendbar sind, beispielsweise zur Verwendung in oder als Sitzmöbel.

Weitere Ausgestaltungen, Abwandlungen oder Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Verfahren zur Herstellung eines Formteillaminats (1) mit mehrschichtigem Aufbau (2) und dreidimensionaler Form, insbesondere für die Herstellung von Möbeln, dekorativen Elementen, Hohlraumkanälen, Automobilzubehör und dergleichen, wobei ein zumindest im wesentlichen plattenförmiges Werkstoffteil (6) mit mehrschichtigem Aufbau (2) zu dem Formteillaminat (1) insbesondere mittels Thermoformen umgeformt wird, wobei das Werkstoffteil (6) mindestens einen umformbaren, insbesondere thermoformbaren Träger (3) und mindestens ein dem Träger (3) zugeordnetes, insbesondere textiles Flächenmaterial (4) aufweist,
**dadurch gekennzeichnet,**
**daß** das Flächenmaterial (4) während der Umformung des Werkstoffteils (6) auf den Träger (3) auflaminiert wird derart, daß der Träger (3) und das Flächenmaterial (4) während der Umformung auf- und/oder gegeneinander verschoben werden und nach Beendigung der Umformung das Formteillaminat (1) resultiert, bei dem das Flächenmaterial (4) und der Träger (3) unverschiebbar miteinander verbunden sind.

2. Verfahren nach Anspruch 1, **dadurch gekennzeichnet, daß** das Flächenmaterial (4) zumindest im wesentlichen vollflächig auf den Träger (3) auflaminiert wird und/oder daß das Flächenmaterial (4) und der Träger (3) vor dem Umformen vorlaminiert werden.

3. Verfahren nach Anspruch 2, **dadurch gekennzeichnet, daß** die Vorlaminierung des Flächenmaterials (4) auf den Träger (3) bei der Umformung insbesondere durch Erwärmung gelöst wird derart, daß der Träger (3) und das Flächenmaterial (4) während der Umformung auf- und/oder gegeneinander verschoben werden.

4. Verfahren nach Anspruch 2 oder 3, **dadurch gekennzeichnet, daß** die Vorlaminierung des Flächenmaterials (4) auf den Träger (3) infolge der Eigenklebrigkeit, insbesondere Hitzeklebrigkeit, des Trägers (3) erfolgt, insbesondere wobei während der Umformung zumindest die in Kontakt mit dem Flächenmaterial (4) stehende Oberfläche des Trägers (3) durch Erwärmen in einen hitzeklebrigen Zustand gebracht wird derart, daß das Flächenmaterial (4) und der Träger (3) während der Umformung auf- und/oder gegeneinander verschoben werden, und nach Beendigung der Umformung abgekühlt wird, so daß das Flächenmaterial (4) und der Träger (3) unverschiebbar miteinander verbunden werden.

5. Verfahren nach Anspruch 2 oder 3, **dadurch gekennzeichnet, daß** die Vorlaminierung des Flächenmaterials (4) auf den Träger (3) mittels eines Laminiermittels, insbesondere Klebstoffs, erfolgt, insbesondere wobei während der Umformung das Laminiermittel durch Erwärmen in einen flüssigen, insbesondere zähflüssigen, und/oder hitzeklebrigen Zustand gebracht wird derart, daß das Flächenmaterial (4) und der Träger (3) während der Umformung auf- und/oder gegeneinander verschoben werden, und nach Beendigung der Umformung abgekühlt wird, so daß das Flächenmaterial (4) und der Träger (3) unverschiebbar miteinander verbunden werden.

6. Verfahren nach einem der Ansprüche 1 bis 5, **dadurch gekennzeichnet, daß** das Flächenmaterial (4) und der Träger (3) nach Beendigung des Umformens durch Abkühlen unverschiebbar miteinander verbunden werden.

7. Verfahren nach Anspruch 1, **dadurch gekennzeichnet, daß** das Flächenmaterial (4) vor der Umformung unverbunden auf den Träger (3) aufgelegt wird.

8. Verfahren nach Anspruch 7, **dadurch gekennzeichnet, daß** die Laminierung während der Umformung des Flächenmaterials (4) auf den Träger (3) infolge der Eigenklebrigkeit, insbesondere Hitzeklebrigkeit, des Trägers (3) erfolgt, insbesondere wobei während der Umformung zumindest die in Kontakt mit dem Flächenmaterial (4) stehende Oberfläche des Trägers (3) durch Erwärmen in einen hitzeklebrigen Zustand gebracht wird und nach Beendigung der Umformung abgekühlt wird, so daß das Flächenmaterial (4) und der Träger (3) unverschiebbar miteinander verbunden werden.

9. Verfahren nach Anspruch 7, **dadurch gekennzeichnet, daß** die Laminierung durch ein vor der Umformung appliziertes Laminiermittel zustande kommt, insbesondere wobei die Laminierung während der Umformung des Flächenmaterials (4) auf den Träger (3) infolge der Überführung des Laminiermittels durch Erwärmen in einen flüssigen, insbesondere zähflüssigen, und/oder hitzeklebrigen Zustand erfolgt und nach Beendigung der Umformung abgekühlt wird, so daß das Flächenmaterial (4) und der Träger (3) unverschiebbar miteinander verbunden werden.

10. Verfahren nach Anspruch 8 oder 9, **dadurch gekennzeichnet, daß** das Flächenmaterial (4) und der Träger (3) durch Abkühlen unverschiebbar miteinander verbunden werden.

11. Verfahren nach einem oder mehreren der vorangehenden Ansprüche, **dadurch gekennzeichnet, daß** als Träger (3) ein Schaumstoff, insbesondere auf Basis von Polyolefinen oder Polyurethanen, vorzugsweise Polyolefinen verwendet wird, insbesondere wobei als Träger (3) ein geschlossenporiger und/oder geschlossenzelliger Schaumstoff verwendet wird, und/oder daß der Träger (3) nichtporös und/oder nichtgeschäumt ausgebildet wird und/oder daß als Träger (3) ein thermoplastisches, insbesondere hitzeklebriges Material verwendet wird.

12. Verfahren nach einem oder mehreren der vorangehenden Ansprüche, **dadurch gekennzeichnet, daß** als Flächenmaterial (4) ein textiles Flächenmaterial , insbesondere ein Gewebe, Gewirke, Gestricke oder Gelege, vorzugsweise ein Gewebe, verwendet wird.

13. Verfahren nach einem oder mehreren der vorangehenden Ansprüche, **dadurch gekennzeichnet, daß** vorzugsweise auf der dem Flächenmaterial (4) abgewandten Seite des Trägers (3) mindestens ein weiterer Träger (3'), insbesondere wie in Anspruch 11 definiert, angeordnet wird.

14. Verfahren nach einem oder mehreren der vorangehenden Ansprüche, **dadurch gekennzeichnet, daß** das Formteillaminat (1) einen Träger (3), insbesondere wie in Anspruch 11 definiert, ein auf den Träger (3) auflaminiertes Flächenmaterial (4), insbesondere wie in Anspruch 12 definiert, und einen auf der dem Flächenmaterial (4) abgewandten Seite des Trägers (3) auflaminierten weiteren Träger (3'), insbesondere wie in Anspruch 13 definiert, umfaßt.

15. Verfahren nach einem oder mehreren der vorangehenden Ansprüche, **dadurch gekennzeichnet, daß** das Werkstoffteil (6) bei der Umformung, insbesondere an den Randbereichen des Werkstoffteils (6), in einem Halterahmen befestigt ist, insbesondere wobei das Werkstoffteil (6) derart in den Halterahmen eingesetzt wird, daß das Flächenmaterial (4) bei der Umformung verschoben wird.

16. Verfahren nach Anspruch 15, **dadurch gekennzeichnet, daß** das Flächenmaterial (4) flächenbezogen kleiner dimensioniert wird als der Träger (3) und/oder der gegebenenfalls vorhandene weitere Träger (3'), insbesondere wobei sich der Träger (3) und/oder (3') flächenbezogen über mindestens einen Rand des Flächenmaterials (4) erstreckt derart, daß das Flächenmaterial (4) nicht von dem Halterahmen aufgenommen, insbesondere nicht fixiert, wird.

17. Verfahren nach einem oder mehreren der vorangehenden Ansprüche, **dadurch gekennzeichnet, daß** gleichzeitig ein erstes Werkstoffteil (6a) zu einem ersten Formteillaminat (1a) und ein zweites Werkstoffteil (6b) zu einem zweiten Formteillaminat (1b) umgeformt werden und das erste Formteillaminat (1a) und das zweite Formteillaminat (1b) derart miteinander verbunden werden, daß die Formteillaminate (1a, 1b) eine Baueinheit (7) mit mindestens einem Hohlraum ausbilden, insbesondere wobei das Umformen zur Herstellung der Baueinheit (7) mittels Thermoformen, insbesondere Twin-Sheet-Thermoformen, durchgeführt wird.

18. Formteillaminat (1), insbesondere für die Herstellung von Möbeln, dekorativen Elementen, Hohlraumkanälen, Automobilzubehör und dergleichen, erhältlich durch ein Verfahren nach einem der Ansprüche 1 bis 17.

19. Formteillaminat (1) nach Anspruch 18, wobei das Formteil einen Träger (3), ein auf den Träger auflaminiertes Flächenmaterial (4) und gegebenenfalls mindestens einen vorzugsweise auf der dem Flächenmaterial (4) abgewandten Seite des Trägers (3) auflaminierten weiteren Träger (3') umfaßt, insbesondere wobei alle Schichten vollflächig miteinander laminiert sind, und wobei das Formteil dreidimensional ausgeformte, nichtplanare Bereiche aufweist, insbesondere wobei die dreidimensional ausgeformten, nichtplanaren Bereiche als Wölbungen, Vertiefungen, Ausbuchtungen oder Biegungen ausgebildet sind.
